(19) **Europäisches Patentamt / European Patent Office / Office européen des brevets**

(11) **EP 1 665 781 B1**

(12) **EUROPEAN PATENT SPECIFICATION**

(45) Date of publication and mention
of the grant of the patent:
**07.02.2007 Bulletin 2007/06**

(21) Application number: **04744834.5**

(22) Date of filing: **25.08.2004**

(51) Int Cl.:
**H04N 5/44** (2006.01)

(86) International application number:
**PCT/IB2004/051561**

(87) International publication number:
**WO 2005/025214 (17.03.2005 Gazette 2005/11)**

(54) **ROBUST DE-INTERLACING OF VIDEO SIGNALS**

ROBUSTE ENTSCHACHTELUNG VON VIDEOSIGNALEN

DESENTRELACEMENT ROBUSTE DE SIGNAUX VIDEO

(84) Designated Contracting States:
**AT BE BG CH CY CZ DE DK EE ES FI FR GB GR HU IE IT LI LU MC NL PL PT RO SE SI SK TR**

(30) Priority: **04.09.2003 EP 03103294**

(43) Date of publication of application:
**07.06.2006 Bulletin 2006/23**

(73) Proprietor: **Koninklijke Philips Electronics N.V.**
**5621 BA Eindhoven (NL)**

(72) Inventor: **DE HAAN, Gerard**
**NL-5656 AA Eindhoven (NL)**

(74) Representative: **Groenendaal, Antonius W. M.**
**Philips**
**Intellectual Property & Standards**
**P.O. Box 220**
**5600 AE Eindhoven (NL)**

(56) References cited:
**EP-A- 1 158 792          EP-A- 1 191 786**
**WO-A-00/72585**

**Description**

Method for de-interlacing a video signal with interpolating a first pixel sample from a first set of pixels and a second set of pixels, and interpolating a second pixel sample from said first set of pixels and a third set of pixels. The invention further relates to a display device and a computer program for de-interlacing a video signal.

De-interlacing is the primary resolution determination of high-end video display systems to which important emerging non-linear scaling techniques can only add finer detail. With the advent of new technologies like LCD and PDP, the limitation in the image resolution is no longer in the display device itself, but rather in the source or transmission system. At the same time these displays require a progressively scanned video input. Therefore, high quality de-interlacing is an important pre-requisite for superior image quality in such display devices.

A first step to de-interlacing is known from P. Delonge, et al., "Improved Interpolation, Motion Estimation and Compensation for Interlaced Pictures", IEEE Tr. on Im. Proc., Vol. 3, no. 5, Sep. 1994, pp 482-491.

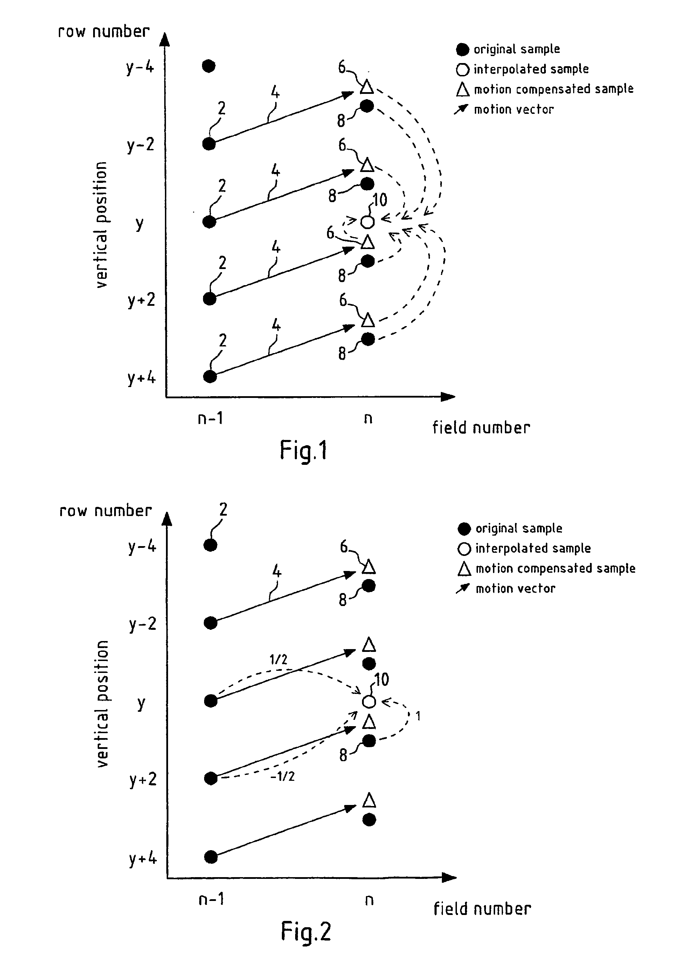

The disclosed method is also known as the general sampling theorem (GST) de-interlacing method. The method is depicted in Fig. 1. Fig. 1 depicts a field of pixels 2 in a vertical line on even vertical positions $y+4$ - $y-4$ in a temporal succession of n-1 - n. For de-interlacing, two independent sets of pixel samples are required. The first set of independent pixel samples is created by shifting the pixels 2 from the previous field n -1 over a motion vector 4 towards a current temporal instance n into motion compensated pixel samples 6. The second set of pixels 8 is located on odd vertical lines $y+3$ - $y-3$. Unless the motion vector 6 is small enough, e.g. unless a so-called "critical velocity" occurs, i.e. a velocity leading to an odd integer pixel displacements between two successive fields of pixels, the pixel samples 6 and the pixels 8 are said to be independent. By weighting the pixel samples 6 and the pixels 8 from the current field the output pixel sample 10 results as a weighted sum (GST-filter) of samples.

Mathematically, the output sample pixel 10 can be described as follows. Using $F(\bar{x},n)$ for the luminance value of a pixel at position $\bar{x}$ in image number n, and using $F_i$ for the luminance value of interpolated pixels at the missing line (e.g. the odd line) the output of the GST de-interlacing method is as:

$$F_i(\bar{x},n) = \sum_k F(\bar{x}-(2k+1)\bar{u}_y,n)h_1(k,\delta_y)+$$
$$\sum_m F(\bar{x}-\bar{e}(\bar{x},n)-2m\bar{u}_y,n-1)h_2(m,\delta_y)$$

with $h_1$ and $h_2$ defining the GST-filter coefficients. The first term represents the current field n and the second term represents the previous field n-1. The motion vector $\bar{e}(\bar{x},n)$ is defined as:

$$\bar{e}(\bar{x},n) = \begin{pmatrix} d_x(\bar{x},n) \\ 2\,Round\left(\frac{d_y(\bar{x},n)}{2}\right) \end{pmatrix}$$

with Round ( ) rounding to the nearest integer value and the vertical motion fraction $\delta_y$ defined by:

$$\delta_y(\bar{x},n) = \left| d_y(\bar{x},n)-2\,Round\left(\frac{d_y(\bar{x},n)}{2}\right) \right|$$

The GST-filter, composed of the linear GST-filters $h_1$ and $h_2$, depends on the vertical motion fraction $\delta_y(\bar{x},n)$ and on the sub-pixel interpolator type.

Delonge proposed to just use vertical interpolators and thus use interpolation only in the y-direction. If a progressive image $F^p$ is available, $F^e$ for the even lines could be determined from the luminance values of the odd lines $F^o$ as:

$$F^e(z,n) = (F^p(z,n-1)H(z))_e =$$
$$F^o(z,n-1)H^o(z) + F^e(z,n-1)H^e(z)$$

in the z-domain where $F^e$ is the even image and $F^o$ is the odd image. Then $F^o$ can be rewritten as:

$$F^o(z,n-1) = \frac{F^o(z,n) - F^e(z,n-1)H^o(z)}{H^e(z)}$$

which results in:

$$F^e(z,n) = H_1(z)F^o(z,n) + H_2(z)F^e(z,n-1)$$

The linear interpolators can be written as:

$$H_1(z) = \frac{H^{o(z)}}{H^{e(z)}}$$

When using sinc-waveform interpolators for deriving the filter coefficients, the linear interpolators $H_1(z)$ and $H_2(z)$ may be written in the k-domain:

$$h_1(k) = (-1)^k \sin c(\pi(k - \tfrac{1}{2})) \frac{\sin(\pi\delta_y)}{\cos(\pi\delta_y)}$$

$$h_2(k) = (-1)^k \frac{\sin c(\pi(k+\delta_y))}{\cos(\pi\delta_y)}$$

When using a first-order linear interpolator, a GST-filter has three taps. The interpolator uses two neighboring pixels on the frame grid. The derivation of the filter coefficients is done by shifting the samples from the previous temporal frame to the current temporal frame. As such, the region of linearity for a first-order linear interpolator starts at the position of the motion compensated sample. When centering the region of linearity to the center of the nearest original and motion compensated sample, the resulting GST-filters may have four taps. Thus, the robustness of the GST-filter is increased. This is also known from E.B. Belles and G. de Haan, "De-interlacing: a key technology for scan rate conversion", Elsevier Science book series "Advances in Image Communications", vol. 9, 2000.

In case of incorrect motion vectors, it has been proposed to use a median filter. The median filter allows eliminating outliners in the output signal produced by the GST-interlacing method.

However, the performance of a GST-interpolator is degraded in areas with correct motion vectors when applying a median filler. To reduce this degradation, it has been proposed to selectively apply protection (E.B. Bellers and G. de Haan, "De-interlacing: a key technology for scan rate conversion", Elsevier Science book series "Advances in Image Communications", vol. 9, 2000). Areas with near the critical velocity are median filtered whereas other areas are GST-interpolated. The GST de-interlacer produces artifacts in areas with motion vectors near the critical velocity. Consequently, the proposed median protector is applied for near critical velocities as follows:

$$F_i(\vec{x},n) = \begin{cases} MED\{F(\vec{x}+\overrightarrow{u_y},n), F_{GST}(\vec{x},n), F(\vec{x}-\overrightarrow{u_y},n)\} & ,(0,5 \leq |\delta_y| < 1) \\ F_{GST}(\vec{x},n) & ,(otherwise) \end{cases}$$

where $F_{GST}$ represents the output of the GST de-interlacer.

The drawback of this method is that with current GST de-interlacers only part of the available information is used for interpolating the missing pixels. As in video signals spatio-temporal information is available, it should be possible to use information from different time instances and different sections of a video signal to interpolate the missing pixel samples.

Further ways of de-interlacing a video signal are described in WO 00/72585, EP-A-1 158 792 and EP-1 191 786.

It is therefore an object of the invention to provide a more robust de-interlacing. It is a further object of the invention to use more of the available information provided within a video signal for interpolation. It is yet another object or the invention to provide better de-interpolation results.

These and other objects are solved by a method for de-interlacing a video signal with interpolating a first pixel sample from a first set of pixels and a second set of pixels, interpolating a second pixel sample from said first set of pixels and a third set of pixels, calculating a third pixel sample from a pixel of said first set of pixels, calculating a relation between said first pixel sample and said second pixel sample, and calculating an output pixel sample based on said first pixel sample, said second pixel sample, said third pixel sample and said relation between said first pixel sample and said second pixel sample.

A set of pixels might be pixels from different temporal or spatial instances of a video signal. Interpolating said pixels samples may be calculating a weighted sum, a mean sum, a mean square sum or any other relation between the pixel values.

By using the pixel values of different sets of pixels the error of calculating the interpolated output pixel may be minimized. The picture quality may be increased.

By using the relation between the first pixel sample and the second pixel sample, the difference between these pixel samples may be evaluated. This difference may be used for weighting the pixel samples when calculating the output pixel sample. The difference may be an indicator of the correctness of a motion vector.

A method of claim 2 allows using different time instances of a video image. The difference between output samples calculated from a previous and a current time instance and calculated from a current and a following time instance may be compared. In case the samples differ, the motion vector may at least be locally unreliable. The difference between the two calculated pixel samples provides a quality indicator for every interpolated pixel. This allows for discriminating between areas where protection is necessary and areas where the output is correct and no protection is necessary.

The temporal relation between the pixel sets may be set according to claim 3. In this case, it is preferred that three consecutive images are used.

The calculation according to claim 4 allows calculating the output pixel sample with respect to the absolute difference between pixel values of pixels within a first set of pixels and a second set of pixels.

The averaging of claim 5 allows calculating the third pixel sample as an average value. This average value minimizes errors occurring due to outliner pixel values within said set of pixels.

Using vertically neighboring pixels according to claim 6 allows calculating the output pixel based on pixel values vertically neighboring the output pixel.

The motion vector according to claim 7 or 8 enables interpolating the first pixel sample based on motion information. The motion vector allows motion compensation of the interpolation. As with the motion vector the motion within the picture may be estimated, the interpolation may also use this motion information. The interpolation results may then be also based on motion information.

By calculating the motion vector, a method according to claim 9 is preferred. The motion vector may be estimated using different spatial or temporal instances of an image. Depending on the used values, different motion vectors may be calculated, fitting more or less with the actual motion within the image.

By using two different, independent motion vectors according to claim 10, the prediction error may be minimized.

The averaging of claims 11 and 12 minimizes interpolation errors. The more values are used, the better the interpolation results. When using average values and absolute differences, outliners in the pixel values may be accounted for.

Another aspect of the invention is a display device for displaying a de-interlaced video signal comprising first interpolation means for interpolating a first pixel sample from a first set of pixels and a second set of pixels, second interpolation means for interpolating a second pixel sample from said first set of pixels and a third set of pixels, first calculation means for calculating a third pixel sample from a pixel of said first set of pixels, second calculation means for calculating a relation between said first pixel sample and said second pixel sample, and third calculation means for calculating an output pixel sample based on said first pixel sample, said second pixel sample, said third pixel sample and said relation between said first pixel sample and said second pixel sample.

Yet a further aspect of the invention is a computer program for de-interlacing a video signal operable to cause a processor to interpolate a first pixel sample from a first set of pixels and a second set of pixels, interpolate a second pixel sample from said first set of pixels and a third set of pixels, calculate a third pixel sample from a pixel of said first set of pixels, calculate a relation between said first pixel sample and said second pixel sample, and calculate an output pixel sample based on said first pixel sample, said second pixel sample, said third pixel sample and said relation between said first pixel sample and said second pixel sample.

These and other aspects of the invention will be apparent from and elucidated with reference to the embodiments described hereinafter:

Fig. 1 depicts an interpolation according to GST-de-interlacing;
Fig. 2 depicts a first-order linear interpolating;
Fig. 3 depicts a block diagram of the inventive method;

Fig. 2 depicts the result of a first-order linear interpolator, wherein like numerals as in Fig. 1 depict like elements. As the interpolated sample pixel 10 is a weighted sum of neighboring pixels, the weight of each pixel should be calculated by the interpolator. In case a first-order linear interpolator $H(z) = (1 - \delta_y) + \delta_y z^{-1}$ with $0 \leq \delta_y \leq 1$, the interpolators $H_1(z)$ and $H_2(z)$ may be given as:

$$H_1(z) = \frac{\delta_y}{1-\delta_y} z^{-1}$$

$$H_2(z) = (1 - \delta_y) - \frac{(\delta_y)^2}{1-\delta_y} z^{-2}$$

The motion vector may be relevant for the weighting of each pixel. In case a motion of 0.5 pixel per field, i.e. $\delta_y = 0.5$, is given, the inverse z-transform of even field $F^e(z,n)$ results in the spatio-temporal expression for $F^e(y,n)$:

$$F^e(y,n) = F^o(y+1,n) + \frac{1}{2}F^e(y,n-1) - \frac{1}{2}F^e(y+2,n-1)$$

As can be seen from Fig. 2, the neighboring pixels 2 of the previous field n-1 are weighted with 0.5 and the neighboring pixel 8 of the current field $n$ is weighted with 1. The first-order linear interpolator as depicted in Fig. 2 results in a three taps GST-filter. The above calculation assumes linearity between two neighboring pixels on the frame grid. In case the region of linearity is centered to the center of the nearest original and motion compensated sample, the resulting GST-filter may have four taps. The additional tap in these four taps GST-filters increases the contribution of spatially neighboring sample values. Two sets of independent samples from the current field and from previous/next temporal fields, shifted over the motion vector, may be used for GST-filtering only in the vertical direction according the prior art. As the interpolator can only be used on a so-called region of linearity, which has the size of one pixel, the number of taps depends on where the region of linearity is located. This means that up to four neighboring pixels in the vertical direction may be used for interpolation.

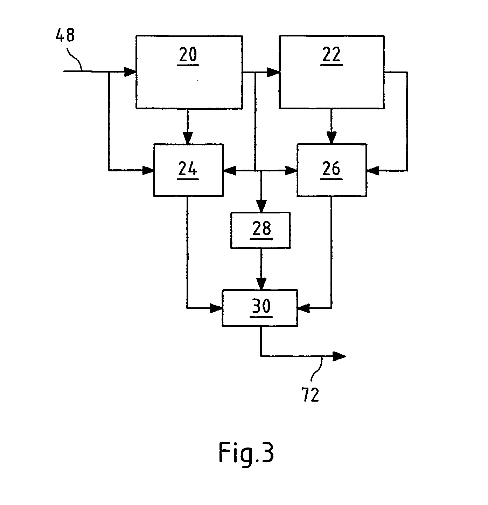

Fig. 3 depicts a block diagram of an implementation of a proposed de-interlacing method. Depicted is an input signal 48, a first field memory 20, a second field memory 22, a first GST-filter 24, a second GST filter 26, averaging means 28, weighting means 30, and an output signal 72.

At least a segment of the input signal 48 may be understood as second set of pixels. At least a segment of the output of field memory 20 may be understood as first set of pixel and at least a segment of the output of field memory 22 may be understood as third set of pixels. When a new image is fed to the field memory 20, the previous image may already be at the output of filed memory 20. The image previous to the image output at field memory 20 may be output at field memory 22. In this case, three temporal succeeding instances may be used for calculating the GST-filtered interpolated output signal.

Input signal 48 is fed to field memory 20. In field memory 20, a motion vector is calculated. This motion vector depends on pixel motion within a set of pixels of said input signal. The motion vector is fed to GST-filter 24. Also input signal 48 is fed to GST filter 24.

The output of said first field memory 20 is fed to said second field memory 22. In said second field memory a second motion vector is calculated. The temporal instance for this motion vector is temporally succeeding the instance of the first field memory 20. Therefore, the motion vector calculated by field memory 22 represents the motion within a set of pixels within an image succeeding the image used in field memory 20. The motion vector is fed to GST-filter 26.

GST-filter 24 calculates a GST filtered interpolated image based on its input signals which are the input signal 48, the motion vector from field memory 20 and the output of the field memory 20. Therefore, the interpolation uses two temporal instances of the image, the first directly from the input signal 48 and the second preceding the input signal 48 by a certain time, in particular the time of one image. In addition, the motion vector is used. The GST-filtering may be carried out according to Figs. 1 and 2.

GST-filter 26 calculates a GST filtered interpolated image based on its input signals which are the output of field memory 20, and the output of field memory 22. In addition GST-filter 26 uses the motion vector calculated within field memory 22. The GST filtered interpolated output is temporally preceding the output of GST filter 24. In addition, the motion vector is used. The GST-filtering may be carried out according to Figs. 1 and 2.

In line averaging means 28, the average of two neighboring pixel values on a vertical line may be averaged. These pixel values may be neighboring the pixel value to be interpolated. The output of the line averaging means 28 is fed to weighting means 30.

The input of said weighting means 30 is the result of line averaging means 28, GST-filter 24 and GST-filter 26. In weighting means 30, the input values are weighted and the weighted values are summed up. The result is output as output signal 72, representing a de-interlaced video signal.

The output of GST filter 24 may be written as:

$$F_{i1}(\vec{x},n) = \sum_{k} F(\vec{x}-(2k+1)\vec{u}_y,n)h_1(k,\delta_y)+$$
$$\sum_{m} F(\vec{x}-\vec{e}(\vec{x},n)-2m\vec{u}_y,n-1)h_2(m,\delta_y)$$

The output of GST filter 26 may be written as:

$$F_{i2}(\vec{x},n) = \sum_{k} F(\vec{x}-(2k+1)\vec{u}_y,n)h_1(k,-\delta_y)+$$
$$\sum_{m} F(\vec{x}+\vec{e}(\vec{x},n)-2m\vec{u}_y,n+1)h_2(-m,-\delta_y).$$

The output of line averaging means may be:

$$QA(\vec{x},n)=\frac{1}{\left|F(\vec{x}-\vec{u_y},n)+F(\vec{x}+\vec{u_y},n)\right|}$$

The inverse absolute difference between the outputs of the GST filters 24, 26 may be understood as a quality indicator QI with:

$$QI(\vec{x},n)=\frac{1}{\left|F_{i1}(\vec{x},n)-F_{i2}(\vec{x},n)\right|}$$

Whereby division by zero should be prevented, e.g. by adding a small constant to the denominator.

This quality indicator may be used to fade between the average of the outputs of GST filters 24, 26, in case they are reliable and a fall back option, e.g. the output of the line averaging means, otherwise:

$$F_i(\vec{x},n)=\frac{QI(\vec{x},n)+QA(\vec{x},n)+F(\vec{x}+u_y,n)}{QI+QA}$$

By using this method the errors of interpolated images are reduced and the image quality is increased.

With the inventive method, computer program and display device the image quality may be increased without increasing transmission bandwidth. This is in particular relevant when display devices are able to provide higher resolution than transmission bandwidth is available.

**Claims**

1.  Method for de-interlacing a video signal with:

    - interpolating a first pixel sample from a first set of pixels and a second set of pixels,
    - interpolating a second pixel sample from said first set of pixels and a third set of pixels,
    - calculating a third pixel sample from a pixel of said first set of pixels,
    - calculating a relation between said first pixel sample and said second pixel sample, and
    - calculating an output pixel sample based on said first pixel sample, said second pixel sample, said third pixel sample and said relation between said first pixel sample and said second pixel sample.

2.  A method of claim 1, wherein said first set of pixels, said second set of pixels and said third set of pixels are derived from succeeding temporal instances of said video instance.

3.  A method of claim 1, wherein said second set of pixels precedes the first set of pixels and/or wherein said third set of pixels follows said first set of pixels.

4.  A method of claim 1, wherein said relation between said first pixel sample and said second pixel sample is the absolute difference between the pixel sample values.

5.  A method of claim 1, wherein said third pixel sample is calculated as an average value of two pixel values of said first set of pixels.

6.  A method of claim 1, wherein said third pixel sample is calculated based on pixel values of vertically neighboring pixels of said first set of pixels.

7.  A method of claim 1, wherein said first pixel sample is interpolated as a weighted sum of pixels from said first set of pixels and said second set of pixels, where the weights of at least some of said pixels depend on a value of a motion vector.

8.  A method of claim 1, wherein said second pixel sample is interpolated as a weighted sum of pixels from said first set of pixels and said third set of pixels, where the weights of at least some of said pixels depend on a value of a motion vector.

9.  A method of one of claims 7 or 8, wherein said motion vector is calculated between said first set of pixels and said second set of pixels or between said first set of pixels and said third set of pixels or between said second set of pixels and said third set of pixels or between said first set of pixels, said second set of pixels, and said third set of pixels.

10. A method of one of claims 7 or 8, wherein the weights of said pixels depend on the values of a first motion vector calculated between said first set of pixels and said second set of pixels and a second motion vector calculated between said first set of pixels and said third set of pixels.

11. A method of claim 1, wherein said output pixel sample is calculated as a weighted sum of an average of said first pixel sample and said second pixel sample and an average of its vertically neighboring pixels in said first set of pixels.

12. A method of claim 11, wherein said weights are substantially inversely related to the absolute difference between said first pixel sample and said second pixel sample and the absolute difference between said vertically neighboring pixels, respectively.

13. Display device for displaying a de-interlaced video signal comprising:

    - first interpolation means for interpolating a first pixel sample from a first set of pixels and a second set of pixels,
    - second interpolation means for interpolating a second pixel sample from said first set of pixels and a third set of pixels,
    - first calculation means for calculating a third pixel sample from a pixel of said first set of pixels,
    - second calculation means for calculating a relation between said first pixel sample and said second pixel sample, and
    - third calculation means for calculating an output pixel sample based on said first pixel sample, said second pixel sample, said third pixel sample and said relation between said first pixel sample and said second pixel sample.

14. Computer program for de-interlacing a video signal operable to cause a processor to:

   - interpolate a first pixel sample from a first set of pixels and a second set of pixels,
   - interpolate a second pixel sample from said first set of pixels and a third set of pixels,
   - calculate a third pixel sample from a pixel of said first set of pixels,
   - calculate a relation between said first pixel sample and said second pixel sample, and
   - calculate an output pixel sample based on said first pixel sample, said second pixel sample, said third pixel sample and said relation between said first pixel sample and said second pixel sample.

**Patentansprüche**

1. Verfahren zur Entschachtelung eines Videosignals, wobei dieses Verfahren die nachfolgenden Verfahrensschritte umfasst:

   - das Interpolieren eines ersten Pixelabtastwertes aus einem ersten Satz von Pixeln und einem zweiten Satz von Pixeln,
   - das Interpolieren eines zweiten Pixelabtastwertes aus dem genannten ersten Satz von Pixels und einem dritten Satz von Pixeln,
   - das Berechnen eines dritten Pixelabtastwertes aus einem Pixel des genannten ersten Satzes mit Pixeln,
   - das Berechnen einer Beziehung zwischen dem genannten ersten Pixelabtastwert und dem genannten zweiten Pixelabtastwert, und
   - das Berechnen eines Ausgangspixelabtastwertes auf Basis des genannten ersten Pixelabtastwertes, des genannten zweiten Pixelabtastwertes, des genannten dritten Pixelabtastwertes und der genannten Beziehung zwischen dem genannten ersten Pixelabtastwert und dem genannten zweiten Pixelabtastwert.

2. Verfahren nach Anspruch 1, wobei der genannte erste Satz mit Pixeln, der genannte zweite Satz mit Pixeln und der genannte dritte Satz mit Pixeln von aufeinander folgenden Zeitpunkten der genannten Videoinstanzen hergeleitet wird.

3. Verfahren nach Anspruch 1, wobei der genannte zweite Satz mit Pixeln dem ersten Satz mit Pixeln vorhergeht und/ oder wobei der genannte dritte Satz mit Pixeln dem genannten ersten Satz mit Pixeln folgt.

4. Verfahren nach Anspruch 1, wobei die genannte Beziehung zwischen dem genannten ersten Pixelabtastwert und dem genannten zweiten Pixelabtastwert die absolute Differenz zwischen den Pixelabtastwerten ist.

5. Verfahren nach Anspruch 1, wobei der genannte dritte Pixelabtastwert als ein Mittelwert zweier Pixelwerte des genannten ersten Satzes mit Pixeln berechnet wird.

6. Verfahren nach Anspruch 1, wobei der genannte dritte Pixelabtastwert auf Basis von Pixelwerten von vertikal benachbarten Pixeln des genannten ersten Satzes mit Pixeln berechnet wird.

7. Verfahren nach Anspruch 1, wobei der genannte erste Pixelabtastwert als eine gewichtete Summe von Pixeln von dem genannten ersten Satz mit Pixeln und dem genannten zweiten Satz mit Pixeln interpoliert wird, wobei die Gewichtungen wenigstens einiger Pixel von einem Wert eines Bewegungsvektors abhängig sind.

8. Verfahren nach Anspruch 1, wobei der genannte zweite Pixelabtastwert als eine gewichtete Summe von Pixeln von dem genannten ersten Satz mit Pixeln und dem genannten dritten Satz mit Pixeln interpoliert wird, wobei die Gewichtungen wenigstens einiger der genannten Pixel von einem Wert eines Bewegungsvektors abhängig sind.

9. Verfahren nach einem der Ansprüche 7 oder 8, wobei der genannte Bewegungsvektor zwischen dem genannten ersten Satz mit Pixeln und dem genannten zweiten Satz mit Pixeln oder zwischen dem genannten ersten Satz mit Pixeln und dem genannten dritten Satz mit Pixeln oder aber zwischen dem genannten zweiten Satz mit Pixeln und dem genannten dritten Satz mit Pixeln oder zwischen dem genannten ersten Satz mit Pixeln, dem genannten zweiten Satz und dem genannten dritten Satz mit Pixeln berechnet wird.

**10.** Verfahren nach einem der Ansprüche 7 oder 8, wobei die Gewichtungen der genannten Pixel von den Werten des ersten Bewegungsvektors, berechnet zwischen dem genannten ersten Satz mit Pixeln und dem genannten zweiten Satz mit Pixeln, und eines zweiten Bewegungsvektors, berechnet zwischen dem genannten ersten Satz mit Pixeln und dem genannten dritten Satz mit Pixeln, abhängig sind.

**11.** Verfahren nach Anspruch 1, wobei der genannte Ausgangspixelabtastwert als eine gewichtete Summe eines Mittelwertes des genannten ersten Pixelabtastwertes und des genannten zweiten Pixelabtastwertes, und eines Mittelwertes der vertikal benachbarten Pixel in dem genannten ersten Satz mit Pixeln berechnet wird.

**12.** Verfahren nach Anspruch 11, wobei die genannten Gewichtungen im Wesentlichen umgekehrt proportional sind zu der absoluten Differenz zwischen dem genannten ersten Pixelabtastwert und dem genannten zweiten Pixelabtastwert, bzw. der absoluten Differenz zwischen den genannten vertikal benachbarten Pixeln sind.

**13.** Wiedergabeanordnung zum Wiedergeben eines entschachtelten Videosignals, wobei diese Anordnung die nachfolgenden Elemente umfasst:

- erste Interpolationsmittel zum Interpolieren eines ersten Pixelabtastwertes aus einem ersten Satz mit Pixeln und einem zweiten Satz mit Pixeln,
- zweite Interpolationsmittel zum Interpolieren eines zweiten Pixelabtastwertes aus dem genannten ersten Satz mit Pixeln und einem dritten Satz mit Pixeln,
- erste Rechenmittel zum Berechnen eines dritten Pixelabtastwertes aus einem Pixel des genannten ersten Satzes mit Pixeln,
- zweite Rechenmittel zum Berechnen einer Beziehung zwischen dem genannten ersten Pixelabtastwert und dem genannten zweiten Pixelabtastwert, und
- dritte Rechenmittel zum Berechnen eines Ausgangspixelabtastwertes auf Basis des genannten ersten Pixelabtastwertes, des genannten zweiten Pixelabtastwertes, des genannten dritten Pixelabtastwertes und der genannten Beziehung zwischen dem genannten ersten Pixelabtastwert und dem genannten zweiten Pixelabtastwert.

**14.** Computerprogramm zum Entschachteln eines Videosignals, um dafür zu sorgen, dass der Prozessor Folgendes durchführt:

- Interpolieren eines ersten Pixelabtastwertes aus einem ersten Satz mit Pixeln und einem zweiten Satz mit Pixeln,
- Interpolieren eines zweiten Pixelabtastwertes aus dem genannten ersten Satz mit Pixeln und einem dritten Satz mit Pixeln,
- Berechnen eines dritten Pixelabtastwertes aus einem Pixel des genannten ersten Satzes mit Pixeln,
- Berechnen einer Beziehung zwischen dem genannten ersten Pixelabtastwert und dem genannten zweiten Pixelabtastwert, und
- Berechnen eines Ausgangspixelabtastwertes auf Basis des genannten ersten Pixelabtastwertes, des genannten zweiten Pixelabtastwertes, des genannten dritten Pixelabtastwertes und der genannten Beziehung zwischen dem genannten ersten Pixelabtastwert und dem genannten zweiten Pixelabtastwert.

**Revendications**

**1.** Procédé de désentrelacement d'un signal vidéo par :

- interpolation d'un premier pixel échantillon à partir d'un premier ensemble de pixels et d'un deuxième ensemble de pixels,
- interpolation d'un deuxième pixel échantillon à partir dudit premier ensemble de pixels et d'un troisième ensemble de pixels,
- calcul d'un troisième pixel échantillon à partir d'un pixel dudit premier ensemble de pixels,
- calcul d'une relation entre ledit premier pixel échantillon et ledit deuxième pixel échantillon, et
- calcul d'un pixel échantillon de sortie sur la base dudit premier pixel échantillon, dudit deuxième pixel échantillon, dudit troisième pixel échantillon et de ladite relation entre ledit premier pixel échantillon et ledit deuxième pixel échantillon.

**2.** Procédé selon la revendication 1, **caractérisé en ce que** ledit premier ensemble de pixels, ledit deuxième ensemble de pixels et ledit troisième ensemble de pixels sont déterminés à partir d'instances temporelles successives de ladite instance vidéo.

**3.** Procédé selon la revendication 1, **caractérisé en ce que** ledit second ensemble de pixels précède le premier ensemble de pixels et/ou **en ce que** ledit troisième ensemble de pixels suit ledit premier ensemble de pixels.

**4.** Procédé selon la revendication 1, **caractérisé en ce que** ladite relation entre ledit premier pixel échantillon et ledit deuxième échantillon est la différence absolue entre les valeurs des pixels échantillons.

**5.** Procédé selon la revendication 1, **caractérisé en ce que** ledit troisième pixel échantillon est calculé en tant que valeur moyenne de deux valeurs de pixels dudit premier ensemble de pixels.

**6.** Procédé selon la revendication 1, **caractérisé en ce que** ledit troisième pixel échantillon est calculé sur la base de valeurs de pixels verticalement voisins dudit premier ensemble de pixels.

**7.** Procédé selon la revendication 1, **caractérisé en ce que** ledit premier pixel échantillon est interpolé comme étant une somme pondérée de pixels à partir dudit premier ensemble de pixels et dudit deuxième ensemble de pixels, les poids d'au moins certains desdits pixels dépendant d'une valeur d'un vecteur de mouvement.

**8.** Procédé selon la revendication 1, **caractérisé en ce que** ledit deuxième pixel échantillon est interpolé comme étant une somme pondérée de pixels à partir dudit premier ensemble de pixels et dudit troisième ensemble de pixels, les poids d'au moins certains desdits pixels dépendant d'une valeur d'un vecteur de mouvement.

**9.** Procédé selon l'une des revendications 7 ou 8, **caractérisé en ce que** ledit vecteur de mouvement est calculé entre ledit premier ensemble de pixels et ledit deuxième ensemble de pixels ou entre ledit premier ensemble de pixels et ledit troisième ensemble de pixels ou entre ledit deuxième ensemble de pixels et ledit troisième ensemble de pixels ou entre ledit premier ensemble de pixels, ledit deuxième ensemble de pixels et ledit troisième ensemble de pixels.

**10.** Procédé selon l'une des revendications 7 ou 8, **caractérisé en ce que** les poids desdits pixels dépendent des valeurs d'un premier vecteur de mouvement calculé entre ledit premier ensemble de pixels et ledit deuxième ensemble de pixels et d'un deuxième vecteur de mouvement calculé entre ledit premier ensemble de pixels et ledit troisième ensemble de pixels.

**11.** Procédé selon la revendication 1, **caractérisé en ce que** ledit pixel échantillon de sortie est calculé comme étant une somme pondérée d'une moyenne dudit premier pixel échantillon et dudit deuxième pixel échantillon et d'une moyenne de ses pixels verticalement voisins dans ledit premier ensemble de pixels.

**12.** Procédé selon la revendication 11, **caractérisé en ce que** lesdits poids sont respectivement liés de façon sensiblement inverse à la différence absolue entre ledit premier pixel échantillon et ledit deuxième pixel échantillon et à la différence absolue entre lesdits pixels verticalement voisins.

**13.** Dispositif d'affichage pour afficher un signal vidéo désentrelacé, comprenant :

- un premier moyen d'interpolation pour interpoler un premier pixel échantillon à partir d'un premier ensemble de pixels et d'un deuxième ensemble de pixels,
- un deuxième moyen d'interpolation pour interpoler un deuxième pixel échantillon à partir dudit premier ensemble de pixels et d'un troisième ensemble de pixels,
- un premier moyen de calcul pour calculer un troisième pixel échantillon à partir dudit premier ensemble de pixels,
- un deuxième moyen de calcul pour calculer une relation entre ledit premier pixel échantillon et ledit deuxième pixel échantillon, et
- un troisième moyen de calcul pour calculer un pixel échantillon de sortie sur la base dudit premier pixel échantillon, dudit deuxième pixel échantillon, dudit troisième pixel échantillon et de ladite relation entre ledit premier pixel échantillon et ledit deuxième pixel échantillon.

**14.** Programme informatique pour désentrelacer un signal vidéo, pouvant être mis en oeuvre pour faire en sorte qu'un processeur :

- interpole un premier pixel échantillon à partir d'un premier ensemble de pixels et d'un deuxième ensemble de pixels,
- interpole un deuxième pixel échantillon à partir dudit premier ensemble de pixels et d'un troisième ensemble de pixels,
- calcule un troisième pixel échantillon à partir d'un pixel dudit premier ensemble de pixels,
- calcule une relation entre ledit premier pixel échantillon et ledit deuxième pixel échantillon, et
- calcule un pixel échantillon de sortie sur la base dudit premier pixel échantillon, dudit deuxième pixel échantillon, dudit troisième pixel échantillon et de ladite relation entre ledit premier pixel échantillon et ledit deuxième pixel échantillon.

Fig.1

Fig.2

Fig.3